# FASCICULE DE BREVET EUROPEEN

(11) **EP 0 928 322 B1**
(45) Date de publication et mention de la délivrance du brevet: **14.07.2004**
(21) Numéro de dépôt: 97942081.7
(22) Date de dépôt: 24.09.1997
(51) Int. Cl.: C09J 11/00, B29B 13/02

(54) **PROCEDE DE TRAITEMENT ANTI-ADHERENT D'UN ADHESIF THERMOFUSIBLE COLLANT EN SURFACE**
VERFAHREN ZUR ANTIADHESIVBEHANDLUNG EINES SCHMELZHAFTKLEBERN MIT HAFTENDEROBERFLÄCHE
METHOD FOR ANTI-ADHESIVE TREATMENT OF FUSIBLE ADHESIVE WITH STICKING SURFACE

(30) Priorité: 26.09.1996 FR 9611726
(43) Date de publication de la demande: 14.07.1999
(73) Titulaire: Henkel France S.A., 51005 Chalons en Champagne Cedex (FR)
(72) Inventeur: HEMON-LAURENS, Jacques, F-51150 Juvigny (FR)
(74) Mandataire: Livet, Marie-José
(86) Numéro de dépôt international: PCT/FR1997/001675
(87) Numéro de publication internationale: WO 1998/013435

(56) Documents cités:
- EP-A- 0 469 564
- EP-A- 0 649 718
- WO-A-94/23921

## Description

La présente invention concerne un procédé de traitement anti-adhérent d'un adhésif collant en surface.

Dans de nombreux domaines de la chimie industrielle, il est courant d'utiliser des masses adhésives thermofusibles collantes en surface, c'est-à-dire des matériaux qui, à la température de manipulation, généralement la température ambiante, sont caractérisés par un ou plusieurs des critères suivants :
- adhésivité intrinsèque de la masse,
- tack dans les conditions normales de température et de pression,
- sensibilité à la pression,
- changement d'état en surface avec un accroissement de la température (l'été par exemple).

Parmi les domaines d'utilisation de tels produits, on peut citer, à titre d'exemple, la liste non exhaustive suivante : hygiène (changes complets, articles d'hygiène féminine), collage de structures, assemblages para-structuraux, moquettes destinées aux plages arrière de véhicules, panneaux composites pour le bâtiment, dalles de plafond, revêtements muraux, panneaux pré-assemblés réutilisables, barres de seuil auto-adhésives, fermetures d'enveloppes pelables ou permanentes.

Compte tenu du caractère adhésif permanent de ces matériaux, il est impératif qu'ils subissent un traitement anti-adhérent pour en permettre une manipulation,, un transport et un stockage plus aisés.

De plus, ce traitement permet d'éviter une agglomération de plusieurs fragments de ces matériaux ainsi qu'un dépôt d'impuretés sur ces derniers.

Dans ce but, les adhésifs thermofusibles collants en surface sont classiquement livrés dans des barquettes paraffinées et siliconées, ce qui permet d'éviter toute adhésion. Ce mode de conditionnement est cependant, particulièrement onéreux et peu pratique, étant donné que les barquettes ont en général une contenance comprise entre 500 g et 3 kg, et qu'il n'est pas rare que des utilisateurs doivent « démouler » une grande quantité par Jour pouvant atteindre plusieurs tonnes.

Pour remédier à ces inconvénients, on a déjà proposé de faire subir aux adhésifs thermofusibles divers traitements permettant de leur faire perdre leur adhérence >en surface et par suite de les conditionner directement en vrac.

On a, par exemple, déjà proposé de coextruder une gaine entourant le produit thermofusible ; la matière de coextrusion peut être, par exemple, du polyéthylène ou un « hot melt » non auto-adhérent compatible avec la formulation du produit extrudé (procédé FULLER)

On a également déjà proposé de protéger des matières adhésives par déposition électrostatique d'une fine couche d'agent anti-adhérent (par électrodéposition d'un produit non auto-adhérent sur les surfaces d'un bloc d'autoadhésif moulé) (procédé RMC BELIX).

On a également déjà proposé un procédé de pulvérisation d'un « hot melt » non auto-adhérent contenu dans un m cule (procédé CECA).

Ces différents processus de traitement présentent toutefois l'inconvénient d'être onéreux, peu pratiques et souvent difficiles à mettre en oeuvre en continu.

Indépendamment de ce qui précède, on connaît, par le document EP-A-0 141 087, un procédé de traitement anti adhérent en discontinu d'un élastomère destiné, en fin de traitement, à subir un processus de vulcanisation à l'issue duquel il perd tout caractère collant. Un tel élastomère constitue toutefois un produit intermédiaire fondamentalement différent d'un adhésif thermofusible collant en surface qui est destiné à être commercialisé en l'état.

On connaît également, par le document EP-A-0 412 867, un procédé de traitement anti-adhérent d'un adhésif thermofusible collant en surface par lequel on applique un revêtement d'un agent anti-adhérent compatible avec l'adhésif thermofusible et n'entraînant pas de modification physico-chimique significative de celui-ci sur au moins une partie de la surface d'un cordon de cet adhésif sortant en continu d'un mélangeur extrudeur ou d'une filière, à une température supérieure à sa température de ramollissement, on refroidit le cordon ainsi revêtu puis on le découpe à la longueur souhaitée et on conditionne directement les fragments ainsi obtenus, sans prendre de précautions supplément aire S.

Ce procédé ne s'est, toutefois, pas avéré à l'usage aussi avantageux qu'on aurait pu l'espérer, compte tenu, en particulier, du fait que sa mise en oeuvre est complexe et inadaptée à l'outil de production : il est en particulier à noter que ce procédé est particulièrement sensible à la température, une variation de l'ordre de 10 de la température de l'adhésif pouvant empêcher l'extrusion de celui-ci.

La présente invention a pour objet de remédier, aux inconvénients susmentionnés en proposant un nouveau procédé de traitement anti-adhérent d'un adhésif thermofusible collant en surface.

Conformément à l'invention, ce procédé est caractérisé par la succession des étapes suivantes :
- on prépare l'adhésif de façon connue en elle-même dans un mélangeur (1) à une température d'environ 130 à 150°C,
- on pompe l'adhésif liquide sortant de ce mélangeur (1) et on le transfère dans une cuve tampon (4) constituée par une cuve à double enveloppe munie, à sa périphérie, d'une chambre annulaire (9) dans laquelle circule un fluide de refroidissement dont on peut régler la température, puis à l'aide d'une presse hydraulique (5) dont on peut régler la pression, on applique sur l'adhésif refroidi présent dans la cuve tampon, une pression pouvant atteindre 180 bars de façon à permettre son extrusion en un cordon se présentant sous la forme d'une pâte, et
- on transfère l'adhésif ainsi extrudé dans une tête de distribution (6, 6') puis dans des organes de répartition et de conditionnement à la sortie desquels on recueille successivement des blocs dosés d'adhésif, individuellement conditionnés dans des sachets fermés réalisés en un polymère thermoplastique, notamment en une polyoléfine ayant un point de fusion supérieur à la température de l'adhésif.

Ce procédé, qui peut avantageusement être mis en oeuvre partiellement en continu, permet bien entendu le traitement de tous les adhésifs thermofusibles collants en surface ; parmi les matières pouvant être traitées, on peut, à titre d'exemple, mentionner les composés énumérés ci-après :
- formulations à base d'EVA, de copolymères styrènebutadiènestyrène SBS, styrène -isoprène - styrène- SIS
- formulations à base de résines et- dérivés "(par exemple les résines de colophane, de coumarone, d'indène, d'hydrocarbures aliphatiques et aromatiques) ;
- formulations à base de copolymères styrène-éthylènebutylène SEB, styrène-éthylène-butylène-styrène SEBS
- formulations à base de copolymères vinyliques partiellement cristallins ;
- formulations à base de polyesters, de polyamides
- d'une façon plus générale, toutes les formulations issues de la combinaison des polymères, copolymères, polycondensats et copolycondensats mentionnés ci-dessus, constitués éventuellement de termonomères de natures diverses.

Bien entendu, les températures de l'adhésif, au niveau du mélangeur d'une part et au niveau de la cuve tampon d'autre part, sont dans chaque cas fonction de la nature particulière de cet adhésif.

Il et à noter que le choix du polymère constitutif des sachets dans lesquels on conditionne les blocs d'adhésif, qui dépend dans chaque cas particulier de la nature de l'adhésif thermofusible collant en surface effectivement mis en oeuvre, correspond à un point critique de l'invention : son point de fusion doit, en effet, être suffisamment élevé pour ne pas risquer d'être dégradé- par l'adhésif sortant de la tête de dosage lors de l'étape de conditionnement, et, en particulier, ne pas risquer dêtre traversé par cet adhésif. En revanche, ce point de fusion doit être suffisamment bas pour lui permettre de fondre sans résidu avec l'adhésif lors de sa mise en oeuvre chez l'utilisateur.

Conformément à l'invention, on peut utiliser lors de la première étape du procédé, un mélangeur héliglobe standard constitué par une sphère équipée, à sa partie interne, de bras périphériques rotatifs.

Il est à noter que dans certains cas particuliers dans lesquels l'adhésif est particulièrement fluide, il peut s'avérer inutile de travailler sous pression.

Selon l'invention la cuve tampon doit, en outre, être équipées d'organes de mesure de la température de l'adhésif présent à sa partie interne.

Selon une autre caractéristique de l'invention dans la cuve tampon on abaisse la température de l'adhésif à environ 65 à 85°C.

Cette première partie du procédé conforme à l'invention doit, en règle générale, être réalisée en discontinu : en effet, la préparation de l'adhésif à partir des ingrédients de base demande en règle générale environ 4 heures et la descente en température de l'adhésif entre 130 à 150°C (mélangeur) et 65 à 85°C (sortie de la cuve tampon), demande en règle générale environ 15 heures.

Par suite, pour mettre en oeuvre le procédé selon l'invention, on utilise plusieurs cuves tampon dont la. contenance est inférieure à celle du mélangeur ; à la sortie de ce dernier, l'adhésif est, dans une première étape, transféré dans l'une de ces cuves où son refroidissement est amorcé, puis, dans une seconde étape dans laquelle la descente en température peut être poursuivie, la cuve est mise en place dans une presse hydraulique notamment à l'aide d'un chariot élévateur et reliée à la tête de distribution de façon à pouvoir effectuer la seconde partie du procédé qui peut, avantageusement, être mise en oeuvre en continu.

Par ailleurs, l'une des caractéristiques essentielles de l'invention est liée au réglage des différents pa ramètres intervenant dans la mise en oeuvre du procédé : viscosité, température et pression de l'adhésif dans la cuve tampon, débit du cordon à la sortie de cette cuve, ...

Il est à cet effet connu que la viscosité de l'adhésif est une fonction sensiblement linéaire décroissante de la température.

On s'est, en outre, rendu compte qu'à température constante le débit du cordon à la sortie de la cuve tampon, au niveau de la tête de distribution, croît linéairement en fonction de la- pression régnant dans cette cuve ; on obtient, bien entendu des courbes différentes pour chaque température, et pour un débit donné, plus la température est élevée, plus la pression associée est faible.

Cette linéarité est largement de nature à faciliter les différents réglages nécessaires à la mise en oeuvre du procédé : il est en effet toujours avantageux de travailler à la température maximale possible, afin de pouvoir, réduire la pression.

Compte tenu de cette situation, et selon une caractéristique préférentielle de l'invention, en début de procédé, on choisit un débit de consigne de l'adhésif devant être obtenu à la sortie de la cuve tampon, au niveau de la tête de distribution, on détermine la température maximale de l'adhésif compatible avec la température de fusion du polymère constitutif des sachets, on en déduit la pression correspondante pour obtenir le débit de consigne et on règle en conséquence, d'une part, la température de l'adhésif présent dans la cuve tampon et, d'autre part, la pression appliquée à cet adhésif.

Cette opération préalable doit, bien entendu, être réitérée pour chaque type d'adhésif et pour chaque type de film.

Selon une première variante de l'invention, la tête de distribution est équipée d'organes de temporisation réglables correspondant aux organes de répartition et permettant de recueillir successivement à la sortie de celle-ci des blocs dosés d'adhésif et on conditionne individuellement ces blocs dans des sachets par la succession des étapes suivantes :
- on enroule autour d'une bobine un film en un polymère thermoplastique,
- on transfère la bobine ainsi équipée à proximité de la tête de distribution au droit de laquelle on déroule le film en continu de façon à l'alimenter en blocs dosés d'adhésif successifs, et
- on replie le film sur lui-même, on le soude autour des blocs et on le découpe entre ceux-ci de façon à obtenir des blocs conditionnés dans des sachets individuels.

Il ne reste alors plus qu'à refroidir les blocs ainsi conditionnés avant de les stocker en vue de leur commercialisation.

Conformément à l'invention, l'opération de soudage et de découpe peut être effectuée dans des machines à souder horizontales ou dans des machines à souder verticales connues en elles-mêmes, auquel cas le film est tout d'abord replié sur lui-même longitudinalement de façon à obtenir un manchon continu puis soudé et découpé transversalement.

Selon une variante préférentielle de l'invention, à la sortie de la tête de distribution, on obtient un cordon continu d'adhésif que l'on répartit et conditionne de façon à recueillir successivement des blocs dosés d'adhésif individuellement conditionnés dans des sachets par la succession des étapes suivantes :
- on enroule autour d'une bobine un film en un polymère thermoplastique,
- on transfère la bobine ainsi équipée à proximité de l'extrémité d'un tapis transporteur essentiellement horizontal, située au droit de la tête de distribution,
- on déroule le film en continu sur le tapis transporteur, se déplaçant lui aussi en continu, tout en lui donnant la forme d'une gouttière,
- on introduit en continu le cordon d'adhésif à la partie interne de la gouttière ainsi formée,
- on rassemble par pincement les bords supérieurs libres de la gouttière et l'on effectue, à ce niveau, une soudure longitudinale de façon à obtenir un cordon continu d'adhésif emballé dans un tube de film polymère,
- on transfère le cordon d'adhésif ainsi emballé dans des organes de répartition et de déformation au niveau desquels. on l'écrase à intervalles réguliers perpendiculairement à son axe longitudinal de façon à obtenir une succession de blocs de dimensions constantes séparés par des zones de collage par écrasement, et
- on découpe le cordon au niveau des zones de collage par écrasement.

Il est à noter qu'il est avantageux de refroidir le cordon au niveau des zones de collage par écrasement avant d'effectuer la découpe pour éviter tout risque de fuite d'adhésif consécutive à une température trop élevée entraînant une étanchéité imparfaite à ce niveau.

Il est également avantageux d'aplatir préalablement le cordon d'adhésif dans des organes de préformage avant de le transférer dans les organes de répartition et de déformation..

L'invention se rapporte également à une installation permettant la mise en oeuvre de la seconde partie (continue) du procédé correspondant à cette seconde variante de l'invention.

Conformément à l'invention, une telle installation comporte :
- un tapis transporteur essentiellement horizontal dont une extrémité est située au droit de la tête de distribution,
- des organes de répartition et de déformation, et
- des organes de découpe.

Le tapis transporteur est avantageusement équipé :
- d'organes de mise en forme du film d'emballage ayant une section en forme de U,
- d'organes de pincement, de préférence constitués par deux galets d'axe vertical situés à proximité immédiate l'un de l'autre,
- d'une soudeuse horizontale fonctionnant de préférence par soufflage d'air chaud, et le cas échéant,
- d'organes de préformage constitués par une barre de préformage ayant de préférence une hauteur variable, et sous laquelle on fait passer le cordon d'adhésif dans le but de l'aplatir.

Selon une caractéristique préférentielle de l'invention, les organes de répartition et de déformation sont constitués par deux bandes sans fin se déplaçant en synchronisme l'une au-dessus de l'autre, situées directement en aval du tapis transporteur et définissant entre elles un espace intermédiaire destiné à recevoir le cordon d'adhésif emballé.

Conformément à l'invention, ces bandes sans fin sont équipées, à intervalles réguliers, de taquets d'écrasement montés Perpendiculairement à l'axe d'avancement et coopérant deux à deux de part et dl autre de. l'espace intermédiaire de façon à permettre la déformation localisée du cordon d'adhésif et l'obtention des zones, de collage par écrasement.

Il est avantageux de monter les taquets d'écrasement de manière amovible de façon à permettre de modifier leur espacement respectif et, par suite, la position des zones de collage par écrasement et les dimensions des différents blocs.

Par ailleurs et selon une autre caractéristique de l'invention, les taquets d'écrasement sont constitués par des cylindres équipés d'un méplat de dimension correspondant à la largeur des zones de collage par écrasement.

L'expérience a montré que pour avoir une découpe suffisamment précise, il convient de prévoir des zones de collage par écrasement ayant une largeur au moins de l'ordre de 12 mm.

Les organes de découpe sont en règle générale classiquement constitués par des lames de découpe coopérant avec un détecteur de présence.

Plus, précisément, et selon une caractéristique particulièrement avantageuse de l'invention, ces organes sont constitués par un couteau fixé sur un vérin de façon à pouvoir se déplacer en va-et-vient dans un plan horizontal, essentiellement perpendiculairement à l'axe d'avancement du cordon d'adhésif, et coopérant avec une caméra associée à un analyseur ainsi qu'à un écran de visualisation pour garantir que la découpe soit effectuée exactement au niveau de la partie médiane des zones de collage par écrasement.

On obtient ainsi une parfaite synchronisation de l'opération de découpe et du passage du cordon d'adhésif au droit du couteau de façon à éviter tout risque de fuite d'adhésif consécutif à un mauvais positionnement des organes de découpe.

Pour diminuer encore ce risque de fuite et selon une autre caractéristique de l'invention, les organes de répartition et de déformation sont équipés de buses de pulvérisation de jets d'eau de refroidissement.

Ce refroidissement peut avantageusement être effectué en deux endroits distincts, notamment en partie médiane et à la sortie des organes de répartition et de déformation.

Conformément à l'invention, à la sortie de l'installation, on obtient des blocs individuels d'adhésif qui peuvent être repris pour être conditionnés dans des cartons.

Les caractéristiques du procédé et de l'installation qui font l'objet de l'invention seront décrites plus en détail en se référant aux dessins annexés dans lesquels :
- la figure 1 est un schéma présentant une installation permettant la mise en oeuvre de la première variante du procédé,
- la figure 2 est un schéma représentant une installation permettant la mise en oeuvre de la seconde variante du procédé,
- la figure 3 est un schéma représentant les organes de répartition et de déformation,
- la figure 4 est un schéma représentant les organes de découpe.

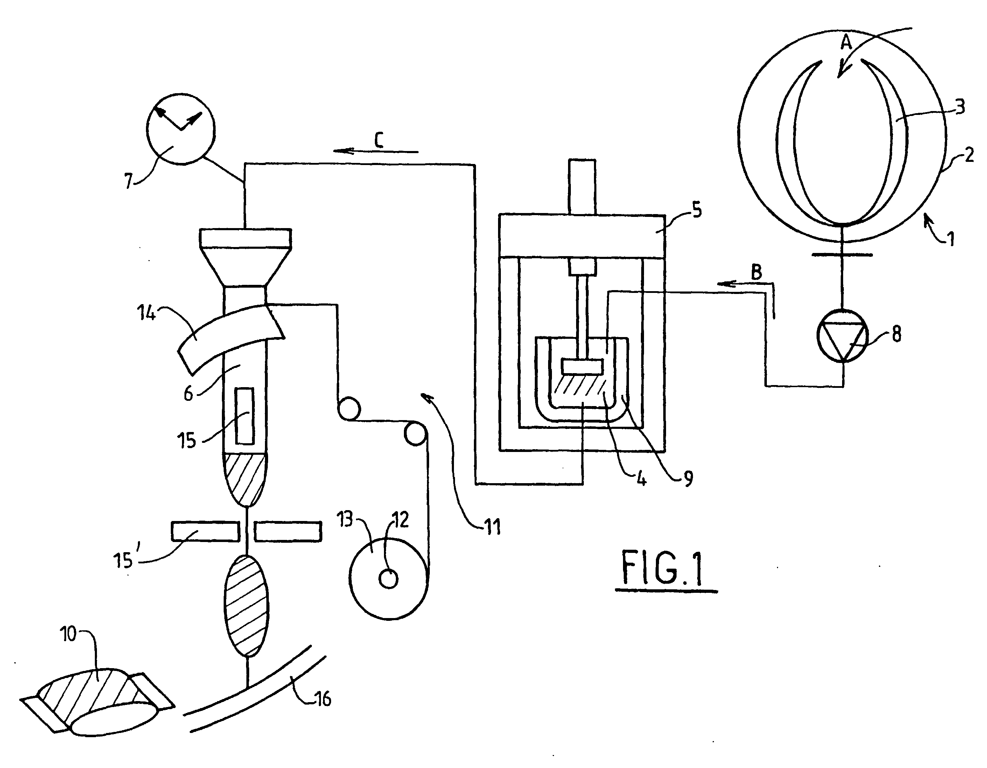

Selon la figure 1, l'installation est schématiquement constituée d'un mélangeur héliglobe 1 constitué par une sphère 2 équipée de bras périphériques 3, mobiles en rotation, d'une cuve tampon 4 coopérant avec une presse hydraulique 5 ainsi que d'une tête de distribution 6 équipée de moyens de temporisation 7 représentés schématiquement sur la figure.

Il est à noter que le mélangeur 1 a en règle. générale une contenance de 2 000 à 5 000 litres alors que la contenance de la cuve 2 est égale au double ou au tiers.

Les ingrédients constitutifs de l'adhésif thermofusible collant en surface sont introduits selon la. flèche A dans le mélangeur 1 et cet adhésif est préparé de manière connue en elle-même dans celui-ci ; il en sort ensuite à une température d'environ 130 à 150°C et est transféré, selon la flèche B et au moyen d'une pompe 8, dans la cuve tampon 4 au niveau de laquelle sa température est abaissée à environ 65 à 850C.

Comme représenté sur la figure, la cuve 4 est constituée par un récipient à double enveloppe muni, à sa périphérie, d'une chambre annulaire 9 dans laquelle on fait circuler un fluide de refroidissement dont on peut régler la température.

La cuve tampon 4 coopère, en outre, avec "la presse hydraulique 5 qui agit sur l'adhésif présent dans celle-ci de manière à permettre son extrusion sous la forme d'un cordon ayant une consistance largement similaire à celle d'une pâte dentifrice.

A la sortie de la cuve tampon 4, ce cordon, dont la température est de l'ordre de 65 à 85°C, est transféré selon la flèche C dans la tête de distribution 6 à la sortie de laquelle on recueille successivement des blocs dosés 10 d'adhésif.

Par ailleurs, et selon la figure 1, la tête de distribution 6 coopère avec des organes de conditionnement Il permettant de conditionner individuellement les blocs 10 dans des sachets réalisés en une polyoléfine thermoplastique ayant un point de fusion supérieur à la température de l'adhésif, de préférence d'environ -80 à 100°C.

Ces organes de conditionnement sont essentielle ment constitués par une bobine 12 située à proximité de la tête de distribution 6 et sur laquelle est enroulé un film 13 de polymère que par une machine à souder .14 connue en elle-même et équipée d'organes de soudure 15, 15 et d'organes de découpe 16.

Dans cette machine 14, le film 13 est, dans un premier temps, replié sur lui-même longitudinalement de façon à obtenir un manchon continu puis soudé et découpé transversalement.

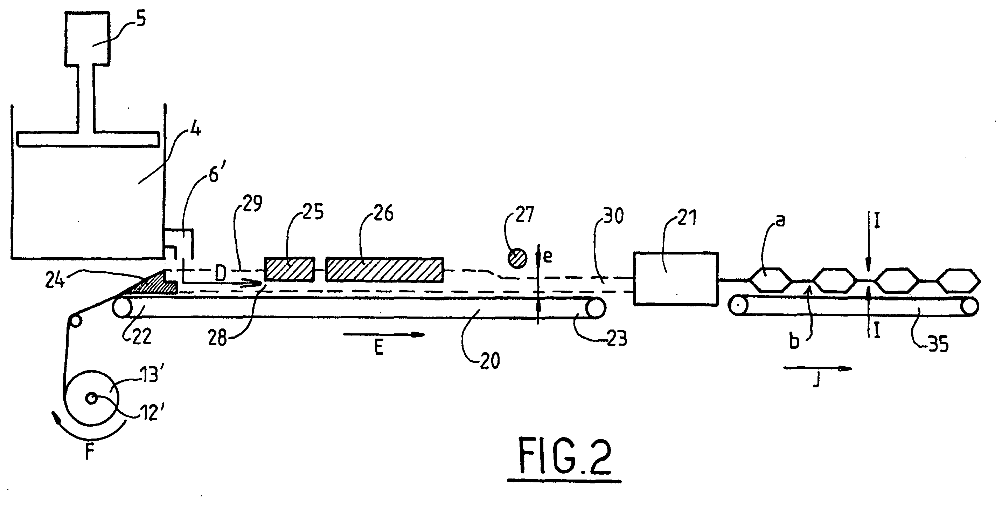

Selon la figure 2, l'installation, permettant de traiter le cordon continu d'adhésif sortant selon la flèche D de la tête de distribution 61 située à la sortie de la cuve tampon 4, comporte schématiquement un tapis transporteur 20 essentiellement horizontal, constamment mobile en translation selon la flèche E, des organes de répartition et de déformation 21 ainsi que des organes de découpe schématiquement représentés par la double flèche I.

Une première extrémité 22 du tapis transporteur 20 est située directement au-dessous de la tête de distribution 61 de manière à recevoir le cordon d'adhésif sortant par celle-ci (flèche D) tandis que son extrémité opposée 23 est située directement en amont des organes de répartition et de déformation 21 qui seront décrits plus en détail dans la suite de cet exposé.

Le tapis transporteur 20 coopère, par ailleurs, au niveau de sa première extrémité 22 avec une bobine 12 sur laquelle est enroulé le film d'emballage 13".

Le film 131 peut être déroulé en continu selon la flèche F de façon à recouvrir la surface supérieure du tapis transporteur 20.

Le tapis 20 est, en outre, muni dans le sens d'avancement E d'organes de mise en forme 24 du film d'emballage 13', d'organes de pincement 25, d'organes de soudage 26 et d'organes de préformage 27.

Au niveau des organes de misé en -forme 24, qui sont constitués par un élément en forme de coin ayant une section en U, le film 13 est déformé en une gouttière 28 représentée en pointillés sur la figure qui reçoit le cordon d'adhésif à sa partie interne.

Les bords supérieurs libres 29 de la gouttière 28 -sont, ensuite, rassemblés au niveau des organes de pincement 25 qui sont constitués par deux galets d'axe vertical non représentés situés à proximité immédiate l'un de l'autre, puis soudés longitudinalement par soufflage d'air chaud dans les organes de soudage 26.

Par suite, à la sortie de ces derniers organes 26, on obtient un cordon continu d'adhésif emballé dans un tube de film 131.

Ce tube est alors aplati au niveau des organes de préformage 27 qui sont constitués par une simple barre horizontale de hauteur e réglable et d'axe essentiellement perpendiculaire au sens d'avancement E sous laquelle on fait passer le cordon d'adhésif emballé de façon à obtenir un cordon continu aplati 30 d'adhésif emballé.

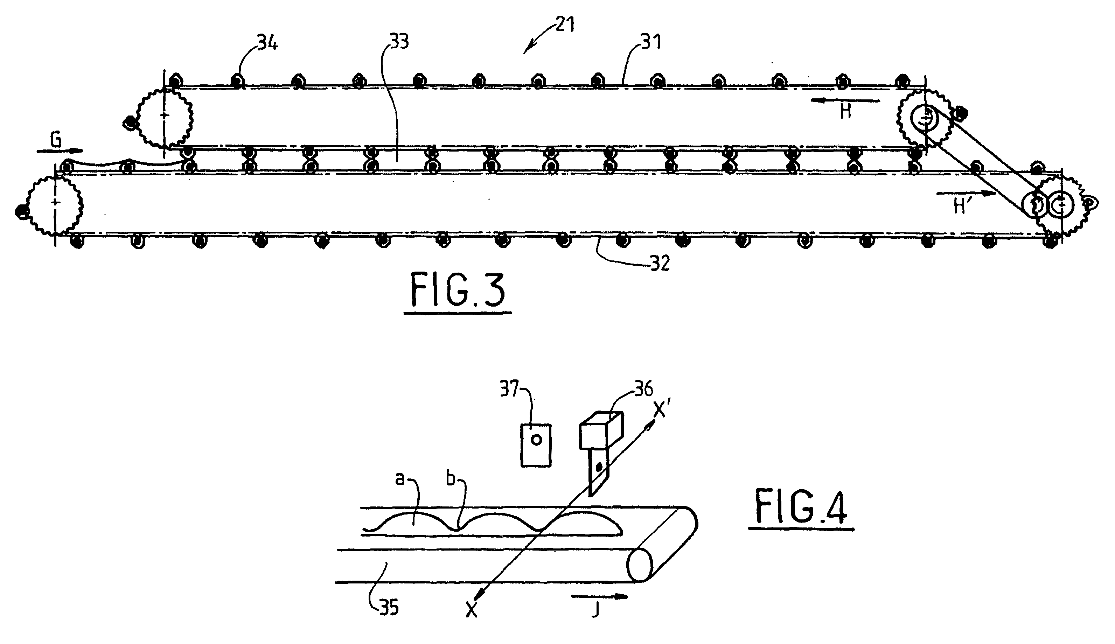

Selon la figure 3, ce cordon 30 est introduit selon la flèche G dans les organes de répartition et de déformation 21 à la sortie desquels on obtient une succession de blocs a de dimensions constantes, séparés par des zones de collage par écrasement b (figure 2).

Les organes de répartition et de déformation 21 sont constitués par deux bandes sans fin 31, 32 qui se déplacent en synchronisme l'une au-dessous de l'autre comme schématisé par les flèches H et HI.

Les deux bandes 31, 32 définissent entre elles un espace intermédiaire 33 qui reçoit le cordon d'adhésif 30 emballé et aplati selon la flèche G.

Les bandes 31, 32 sont par ailleurs équipées, à intervalles réguliers réglables, de taquets d'écrasement 34 constitués par des cylindres présentant un méplat, non représenté, montés perpendiculairement à l'axe d'avancement G.

Les taquets d'écrasement 34 coopèrent deux à deux au niveau de leur méplat de part et d'autre de l'espace intermédiaire 33 de façon à permettre la déformation localisée du cordon 30 lors de son introduction entre les bandes 31, 32 et l'obtention des zones de collage par écrasement b qui séparent les différents blocs a.

Les organes de répartition et de déformation 21 sont, par ailleurs, munis en deux endroits différents de buses de pulvérisation de jets d'eau de refroidissement non-représentées sur la figure 3.

Selon la figure 2, on obtient ainsi à la sortie des organes de répartition et de déformation un cordon continu d'adhésif emballé constitué par une succession de blocs à séparer par des zones de collage par écrasement b et se déplaçant sur une tapis d'évacuation 35 selon la flèche J la découpe selon la flèche 1 de ce cordon au niveau des zones de collage par écrasement b permet d'obtenir des blocs individuels a d'adhésif emballés individuellement.

Selon la figure 4, les organes de découpe sont constitués par un couteau 36 fixé sur un vérin, non représenté, de façon à pouvoir se déplacer en va-et-vient selon les flèches X-X, d'ans un plan horizontal, essentiellement perpendiculairement à l'axe d'avancement J du cordon d'adhésif.

Le mouvement du vérin est commandé par un ensemble 37 représenté schématiquement constitué par une caméra associée à un analyseur ainsi qu'à un écran de visualisation de façon à garantir que la découpe soit effectuée exactement au niveau de la partie médiane des zones de collage par écrasement b séparant les différents blocs a.

Ainsi, à la sortie des organes de découpe, on obtient des blocs individuels pouvant être repris pour être conditionnés dans des cartons.

## Revendications

1. Procédé de traitement anti-adhérent d'un adhésif thermofusible collant en surface,
**caractérisé par** la succession des étapes suivantes :
- on prépare l'adhésif de façon connue en elle-même dans un mélangeur (1) à une température d'environ 130 à 150°C,
- on pompe l'adhésif liquide sortant de ce mélangeur (1) et on le transfère dans une cuve tampon (4) constituée par une cuve à double enveloppe munie, à sa périphérie, d'une chambre annulaire (9) dans laquelle circule un fluide de refroidissement dont on peut régler la température, puis à l'aide d'une presse hydraulique (5) dont on peut régler la pression, on applique sur l'adhésif refroidi présent dans la cuve tampon, une pression pouvant atteindre 180 bars de façon à permettre son extrusion en un cordon se présentant sous la forme d'une pâte, et
- on transfère l'adhésif ainsi extrudé dans une tête de distribution (6, 6') puis dans des organes de répartition et de conditionnement à la sortie desquels on recueille successivement des blocs dosés d'adhésif, individuellement conditionnés dans des sachets fermés réalisés en un polymère thermoplastique, notamment en une polyoléfine ayant un point de fusion supérieur à la température de l'adhésif.

2. Procédé selon la revendication 1,
**caractérisé en ce que**
dans la cuve tampon (4), on abaisse la température de l'adhésif à environ 65 à 85°C.

3. Procédé selon l'une quelconque des revendications 1 à 2,
**caractérisé en ce que**
l'on choisit un débit de consigne de l'adhésif devant être obtenu à la sortie de la cuve tampon (4) au niveau de la tête de distribution (6, 6'), on détermine la température maximale de l'adhésif compatible avec la température de fusion du polymère constitutif des sachets, on en déduit la pression correspondante pour obtenir le débit de consigne et on règle en conséquence, d'une part, la température de l'adhésif présent dans la cuve tampon et, d'autre part, la pression appliquée à cet adhésif.

4. Procédé selon l'une quelconque des revendications 1 à 3,
**caractérisé en ce que**
- la tête de distribution (6) est équipée d'organes de temporisation réglables (7) correspondant aux organes de répartition et permettant de recueillir successivement à la sortie de celle-ci des blocs dosés d'adhésif, et
- l'on conditionne individuellement ces blocs dans des sachets par la succession des étapes suivantes :
- on enroule autour d'une bobine un film en un polymère thermoplastique,
- on transfère la bobine ainsi équipée à proximité de la tête de distribution au droit de laquelle on déroule le film en continu de façon à l'alimenter en blocs dosés d'adhésifs successifs, et
- on replie le film sur lui-même, on le soude autour des blocs et on le découpe entre ceux-ci de façon à obtenir des blocs conditionnés dans des sachets individuels.

5. Procédé selon l'une quelconque des revendications 1 à 3,
**caractérisé en ce qu'**
à la sortie de la tête de distribution (6'), on obtient un cordon continu d'adhésif que l'on répartit et conditionne de façon à recueillir successivement des blocs dosés d'adhésif individuellement conditionnés dans des sachets par la succession des étapes suivantes :
- on enroule, autour d'une bobine (12'), un film (13') en un polymère thermoplastique,
- on transfère la bobine (12') ainsi équipée à proximité de l'extrémité (22) d'un tapis transporteur (20) essentiellement horizontal, située au droit de la tête de distribution (6'),
- on déroule le film en continu sur le tapis transporteur (20), se déplaçant lui aussi en continu, tout en lui donnant la forme d'une gouttière (28),
- on introduit en continu le cordon d'adhésif à la partie interne de la gouttière (28) ainsi formée,
- on rassemble par pincement les bords supérieurs libres (29) de la gouttière (28) et l'on effectue, à ce niveau, une soudure longitudinale de façon à obtenir un cordon continu d'adhésif emballé dans un tube de film polymère,
- on transfère le cordon d'adhésif ainsi emballé dans dés organes de répartition et de déformation (21) au niveau desquels on l'écrase à intervalles réguliers perpendiculairement à son axe longitudinal de façon à obtenir une succession de blocs (a) de dimensions constantes séparés par des zones de collage par écrasement (b), et
- on découpe le cordon au niveau des zones de collage par écrasement (b).

6. Procédé selon la revendication 5,
**caractérisé en ce que**
avant la mise en oeuvre de l'étape de découpe, on refroidit le cordon au niveau des zones de collage par écrasement (b).

7. Procédé selon l'une quelconque des revendications 5 et 6,
**caractérisé en ce que**
avant de transférer le cordon d'adhésif emballé dans les organes de répartition et de déformation (21), on l'aplatit en le faisant passer au-dessous d'une barre de préformage (27).

8. Installation permettant la mise en oeuvre du procédé selon l'une quelconque des revendications 5 à 7,
**caractérisée en ce qu'**elle comporte :
- un tapis transporteur (20) essentiellement horizontal dont une extrémité (22) est située au droit de la tête de distribution (6'), ce tapis étant équipé :
- d'organes (24) de mise en forme du film d'emballage ayant une section en forme de U,
- d'organes de pincement (25), de préférence constitués par deux galets d'axe vertical situés à proximité immédiate l'un de l'autre,
- d'une soudeuse horizontale (26) fonctionnant de préférence par soufflage d'air chaud, et le cas échéant,
- d'une barre de préformage (27) ayant de préférence une hauteur (e) variable,
- des organes de répartition et de déformation (21), et
- des organes de découpe (II).

9. Installation selon la revendication 8,
**caractérisée en ce que**
les organes de répartition et de déformation (21) sont constitués par deux bandes sans fin (31, 32) se déplaçant en synchronisme l'une au-dessus de l'autre, situées directement en aval du tapis transporteur (20) et définissant entre elles un espace intermédiaire (33) destiné à recevoir le cordon d'adhésif emballé, ces bandes sans fin étant équipées, à intervalles réguliers, de taquets d'écrasement (34) montés perpendiculairement à l'axe d'avancement et coopérant deux à deux de part et d'autre de l'espace intermédiaire (33) de façon à permettre la déformation localisée du cordon d'adhésif et l'obtention des zones de collage par écrasement (b).

10. Installation selon la revendication 9,
**caractérisée en ce que**
la distance entre les taquets d'écrasement (34) est réglable.

11. Installation selon l'une quelconque des revendications 9 et 10,
**caractérisée en ce que**
les taquets d'écrasement (34) sont constitués par des cylindres équipés d'un méplat de dimension correspondant à la largeur des zones de collage par écrasement (b).

12. Installation selon l'une quelconque des revendications 8 à 11,
**caractérisée en ce que**
les organes de répartition et de déformation (21) sont équipés de buses de pulvérisation de jets d'eau de refroidissement.

13. Installation selon l'une quelconque des revendications 9 à 12,
**caractérisée en ce que**
les organes de découpe sont constitués par un couteau (36) fixé sur un vérin de façon à pouvoir se déplacer en va-et-vient dans un plan horizontal essentiellement perpendiculairement à l'axe d'avancement du cordon d'adhésif, et coopérant avec une caméra associée à un analyseur ainsi qu'à un écran de visualisation (37) pour garantir que la découpe soit effectuée exactement au niveau de la partie médiane des zones de collage par écrasement (b).

## Claims

1. Method for the anti-adhesive treatment of a fusible adhesive with sticking surface, **characterised by** the following successive steps:
- preparing the adhesive in a per se known manner in a mixer (1) at a temperature of about 130 to 150 °C,
- pumping the liquid adhesive coming from this mixer (1) and transferring it into a buffer vessel (4) constituted by a double-skinned vessel equipped at its periphery with an annular chamber (9) in which a cooling fluid circulates whose temperature can be regulated, then, with the help of a hydraulic press (5) whose pressure can be regulated, applying to the cooled adhesive in the buffer vessel a pressure of up to 180 bars so as to enable its extrusion in a ribbon in the form of a paste, and
- transferring the thus extruded adhesive into a dispensing head (6, 6'), then into splitting and packing means, successively collecting from the outlet thereof measured-out blocks of adhesive, individually packaged in sealed bags made of a thermoplastic polymer, in particular a polyolefin with a melting point higher than the temperature of the adhesive.

2. The method as claimed in claim 1,
**characterised in that** in the buffer vessel (4) the temperature of the adhesive is lowered to approximately 65 to 85°C.

3. The method as claimed in either of claims 1 and 2,
**characterised in that** a desired flow rate for the adhesive to be obtained at the outlet of the buffer vessel (4) on the dispensing head (6, 6') is selected, the maximum temperature of the adhesive that is compatible with the melting temperature of the polymer used for the bags is determined, the corresponding pressure thereof is derived so as to arrive at the desired flow rate, and as a consequence the temperature of the adhesive in the buffer vessel, on the one hand, and the pressure applied to said adhesive, on the other, are regulated.

4. The method as claimed in any one of claims 1 to 3,
**characterised in that**
- the dispensing head (6) is fitted with controllable time-delay means (7) corresponding to the splitting means and allowing measured-out blocks of adhesive to be collected in succession at the outlet of said dispensing head, and
- these blocks are individually packed in bags in the following successive steps:
- winding a film of thermoplastic polymer around a reel,
- transferring the reel thereby equipped to the vicinity of the dispensing head, vertically beneath which the film is continuously unwound so as to supply it with successive measured-out blocks of adhesive, and
- folding the film back upon itself, welding it around the blocks and cutting it between the latter so as to obtain blocks packaged in individual bags.

5. The method as claimed in any one of claims 1 to 4,
**characterised in that** at the outlet of the dispensing head (6'), a continuous ribbon of adhesive is obtained which is split and packaged so as to successively recover measured-out blocks of adhesive individually packaged in bags by the following successive steps:
- winding a film (13') made from a thermoplastic polymer around a reel (12'),
- transferring the reel (12') thereby equipped to the vicinity of the extremity (22) of a substantially horizontal conveyor belt (20) situated vertically below the dispensing head (6'),
- continuously unwinding the film onto the conveyor belt (20), which is also travelling continuously, at the same time as giving it the shape of a spout (28),
- continuously introducing the adhesive ribbon into the inner part of the spout (28) thus formed,
- holding together, by pinching them, the free upper edges (29) of the spout (28) and welding them lengthways there so as to obtain a continuous ribbon of adhesive packed in a tube of polymer film,
- transferring the ribbon of adhesive thus packed into splitting and deforming devices (21), which squash said ribbon at regular intervals perpendicularly to its longitudinal axis so as to obtain a succession of blocks (a) of constant dimensions separated by crush-bonding zones (b), and
- cutting the ribbon at the crush-bonding zones (b).

6. The method as claimed in claim 5,
**characterised in that** prior to carrying out the cutting step, the ribbon is cooled at the crush-bonding zones (b).

7. The method as claimed in either one of claims 5 and 6,
**characterised in that** prior to transferring the packed ribbon of adhesive into the splitting and deforming devices (21), it is flattened by passing it beneath a pre-shaping bar (27).

8. Installation for carrying out the method as claimed in any one of claims 5 to 7, **characterised in that** it comprises:
- a substantially horizontal conveyor belt (20), one end (22) of which is situated vertically beneath the dispensing head (6'), said belt being fitted with:
- means (24) for forming the packing film having a U-shaped section,
- pinching means (25) preferably made up of two rollers with a vertical axis, situated immediately next to one another,
- a horizontal welding machine (26) which preferably operates by blasting hot air, and if necessary,
- a pre-shaping bar (27) which is preferably variable in height (e),
- splitting and deforming means (21), and
- cutting means (II).

9. The installation as claimed in claim 8,
**characterised in that** the splitting and deforming means (21) are made up of two endless belts (31, 32) which travel in synchronism one above the other, situated directly downstream of the conveyor belt (20) and defining between them an intermediate space (33) intended to receive the packed ribbon of adhesive, these endless belts being fitted at regular intervals with crushing control stops (34) mounted perpendicularly to the forward travel axis and cooperating in pairs on either side of the intermediate space (33) so as to enable the ribbon of adhesive to be locally deformed and crush-bonding zones (b) to be obtained.

10. The installation as claimed in claim 9,
**characterised in that** the distance between the crushing control stops (34) is adjustable.

11. The installation as claimed in either one of claims 9 and 10,
**characterised in that** the crushing control stops (34) are made up of cylinders presenting a flattened area of a size matching the width of the crush-bonding zones (b).

12. The installation as claimed in any one of claims 8 to 11,
**characterised in that** the splitting and deforming means (21) are fitted with nozzles for spraying jets of cooling water.

13. The installation as claimed in any one of claims 9 to 12,
**characterised in that** the cutting means are made up of a knife (36) fixed on an actuator so as to be able to move to and fro in a horizontal plane substantially perpendicularly to the forward travel axis of the ribbon of adhesive, and cooperating with a camera associated with an analyser and with a visual display device (37) in order to ensure that the cut is made exactly in the middle portion of the crush-bonding zones (b).

## Patentansprüche

1. Verfahren zur Antiadhäsivbehandlung eines Schmelzhaftklebers mit haftender Oberfläche, **gekennzeichnet durch** die Abfolge der folgenden Arbeitsschritte:
- der Kleber wird in an sich bekannter Weise in einem Mischer (1) bei einer Temperatur von etwa 130 bis 150°C zubereitet,
- der aus diesem Mischer (1) kommende Flüssigkleber wird abgepumpt, und er wird in einen Pufferbehälter (4) umgefüllt, der aus einem doppelt ummantelten Behälter besteht, der an seinem Umfang mit einer Ringkammer (9) versehen ist, in der eine Kühlflüssigkeit zirkuliert, deren Temperatur geregelt werden kann, woraufhin mit Hilfe einer hydraulischen Presse (5), deren Druck geregelt werden kann, auf den im Pufferbehälter vorhandenen abgekühlten Kleber ein Druck ausgeübt wird, der 180 bar erreichen kann, um seine Extrusion in einem Streifen zu ermöglichen, der in Form einer breiartigen Masse vorliegt, und
- der so extrudierte Kleber wird in einen Speiserkopf (6, 6') und danach in Verteiler- und Abpackorgane verbracht, an deren Ausgang nacheinander dosierte Kleberblöcke, einzeln abgepackt in verschlossenen Beuteln aufgenommen werden, die aus einem thermoplastischen Polymer, vor allem aus einem Polyolefin mit einem Schmelzpunkt oberhalb der Temperatur des Klebers ausgeführt sind.

2. Verfahren nach Anspruch 1,
**dadurch gekennzeichnet, dass**
in dem Pufferbehälter (4) die Temperatur des Klebers auf etwa 65 bis 85°C abgesenkt wird.

3. Verfahren nach einem der Ansprüche 1 bis 2,
**dadurch gekennzeichnet, dass**
ein Solldurchsatz des Klebers gewählt wird, der am Ausgang des Pufferbehälters (4) im Bereich des Speiserkopfes (6, 6') herbeigeführt werden soll, die maximale Temperatur des Klebers bestimmt wird, die mit der Schmelztemperatur des Polymers, aus dem die Beutel bestehen, vereinbar ist, daraus der entsprechende Druck abgeleitet wird, um den Solldurchsatz zu erzielen, und demzufolge einerseits die Temperatur des im Pufferbehälter vorhandenen Klebers und andererseits der auf diesen Kleber ausgeübte Druck geregelt wird.

4. Verfahren nach einem der Ansprüche 1 bis 3,
**dadurch gekennzeichnet, dass**
- der Speiserkopf (6) mit regelbaren Zeitschaltorganen (7) ausgerüstet ist, die den Verteilerorganen entsprechen und die es ermöglichen, nacheinander an dessen Ausgang dosierte Kleberblöcke aufzunehmen, und
- diese Blöcke durch die Abfolge der folgenden Arbeitsschritte einzeln in Beuteln abgepackt werden:
- um eine Spule wird eine Folie aus einem thermoplastischen Polymer aufgewickelt,
- die so bestückte Spule wird in unmittelbare Nähe des Speiserkopfes verbracht, in dessen Höhe die Folie durchlaufend abgewickelt wird, um sie mit aufeinander folgenden dosierten Kleberblöcken zu beschicken, und
- die Folie wird zusammengefaltet, um die Blöcke herum verschweißt und zwischen diesen geschnitten, um in Einzelbeuteln abgepackte Blöcke zu erhalten.

5. Verfahren nach einem der Ansprüche 1 bis 3,
**dadurch gekennzeichnet, dass**
sich am Ausgang des Speiserkopfes (6') ein durchgehender Kleberstreifen ergibt, der so verteilt und abgepackt wird, dass nacheinander dosierte Kleberblöcke aufgenommen werden, die durch die Abfolge der folgenden Arbeitsschritte einzeln in Beuteln abgepackt werden:
- um eine Spule (12') wird eine Folie (13') aus einem thermoplastischen Polymer aufgewickelt,
- die so bestückte Spule (12') wird in unmittelbare Nähe des Endes (22) eines im wesentlichen horizontalen Transportbands (20) verbracht, das sich in Höhe des Speiserkopfes (6') befindet,
- die Folie wird durchlaufend auf dem Transportband (20) abgewickelt, das sich seinerseits durchlaufend bewegt, wobei ihm die Form einer Rinne (28) gegeben wird,
- der Kleberstreifen wird durchlaufend am inneren Teil der so gebildeten Rinne (28) eingeführt,
- die freien oberen Ränder (29) der Rinne (28) werden durch Einklemmung zusammengenommen, und an dieser Stelle wird eine Längsschweißung ausgeführt, um einen durchgehenden Kleberstreifen zu erhalten, der in einem Schlauch aus Polymerfolie verpackt ist,
- der so verpackte Kleberstreifen wird in Verteilerund Umformorgane (21) verbracht, an denen er in regelmäßigen Abständen senkrecht zu seiner Längsachse eingedrückt wird, um eine Abfolge von Blöcken (a) mit konstanten Abmessungen zu erhalten, die durch Eindrückklebestellen (b) getrennt sind, und
- der Streifen wird im Bereich der Eindrückklebestellen (b) geschnitten.

6. Verfahren nach Anspruch 5,
**dadurch gekennzeichnet, dass**
vor der Durchführung des Schneidvorgangs der Streifen in Höhe der Eindrückklebestellen (b) abgekühlt wird.

7. Verfahren nach einem der Ansprüche 5 und 6,
**dadurch gekennzeichnet, dass**
der verpackte Kleberstreifen vor seiner Verbringung in die Verteiler- und Umformorgane (21) abgeflacht wird, indem er unter einer Vorformleiste (27) hindurchgeführt wird.

8. Anlage zur Anwendung des Verfahrens nach einem der Ansprüche 5 bis 7,
**dadurch gekennzeichnet, dass** sie folgendes umfasst:
- ein im wesentlichen horizontales Transportband (20), von dem sich ein Ende (22) in Höhe des Speiserkopfes (6') befindet, wobei dieses Transportband wie folgt ausgerüstet ist:
- mit Formorganen (24) zum Formen der Verpackungsfolie mit einem U-förmigen Querschnitt,
- mit Einklemmorganen (25), die vorzugsweise aus zwei Rollen mit vertikaler Achse bestehen, die sich in unmittelbarer Nähe zueinander befinden,
- mit einer Horizontalschweißmaschine, die vorzugsweise durch Heißlufteinblasung funktioniert, und gegebenenfalls
- mit einer Vorformleiste (27), die vorzugsweise eine veränderliche Höhe (e) aufweist,
- mit Verteiler- und Umformorganen (21), und
- mit Schneidorganen (II).

9. Anlage nach Anspruch 8,
**dadurch gekennzeichnet, dass**
die Verteiler- und Umformorgane (21) aus zwei Endlosbändern (31, 32) bestehen, die sich gleichlaufend übereinander bewegen, die sich direkt hinter dem Transportband (20) befinden und die zwischen sich einen Zwischenraum (33) definieren, der dazu bestimmt ist, den verpackten Kleberstreifen aufzunehmen, wobei diese Endlosbänder in regelmäßigen Abständen mit Eindrücknasen (34) versehen sind, die senkrecht zur Vorschubachse angebracht sind und paarweise beiderseits des Zwischenraums (33) zusammenwirken, um die lokalisierte Umformung des Kleberstreifens und die Schaffung der Eindrückklebestellen (b) zu ermöglichen.

10. Anlage nach Anspruch 9,
**dadurch gekennzeichnet, dass**
der Abstand zwischen den Eindrücknasen (34) einstellbar ist.

11. Anlage nach einem der Ansprüche 9 und 10,
**dadurch gekennzeichnet, dass**
die Eindrücknasen (34) aus Walzen mit einer Abflachung mit einer Größe entsprechend der Breite der Eindrückklebestellen (b) bestehen.

12. Anlage nach einem der Ansprüche 8 bis 11,
**dadurch gekennzeichnet, dass**
die Verteiler- und Umformorgane (21) mit Zerstäubungsdüsen zum Zerstäuben von Kühlwasserstrahlen ausgerüstet sind.

13. Anlage nach einem der Ansprüche 9 bis 12,
**dadurch gekennzeichnet, dass**
die Schneidorgane aus einem Messer (36) bestehen, das so auf einem Zylinder befestigt ist, dass es sich in einer Hin- und Herbewegung in einer horizontalen Ebene, im wesentlichen senkrecht zur Vorschubachse des Kleberstreifens, bewegen kann, und das mit einer Kamera zusammenwirkt, die mit einem Analysiergerät sowie mit einem Anzeigebildschirm (37) verbunden ist, um zu gewährleisten, dass der Schnitt exakt in Höhe des Mittelteils der Eindrückklebestellen (b) erfolgt.
